# EUROPEAN PATENT APPLICATION

(11) **EP 4 390 304 A1**
(43) Date of publication of application: **26.06.2024**
(21) Application number: 23020565.0
(22) Date of filing: 19.12.2023
(51) Int. Cl.: G01B 11/275, B25B 27/00, B62J 11/22

(54) **CYCLE ALIGNMENT DEVICE**

(30) Priority: 19.12.2022 GB 202219131
(71) Applicant: Adeokun, Lawrence O., London E14 6JZ (GB)
(72) Inventor: Adeokun, Lawrence O., London E14 6JZ (GB)

(57) **Abstract**

Cycle Alignment Device comprised primarily of a rigid structure that houses **Alignment Chamber 1.** The device is mounted to the cycle at a designated location using a mechanism that provides secure connection/attachment and enables the accommodation of varying stem width.

## Description

The invention relates to Cycle alignment.

The object of the invention is to provide a Handlebar alignment tool that can be attached **securely and firmly with no movement,** thereby ensuring the tool does not move out of place during the process of use. Additionally, the mechanism by which it is attached securely must be able to accommodate **different handlebar dimensions** and **Stem width.**

This is used to ensure the wheels are aligned properly in relation to the cycle. For accurate alignment, the central plane of the cycle (assuming the wheels are trued) must be parallel to the stem and perpendicular to the handlebar.

For a clear improvement on GB2486192, EP220204440, EP22020486.1 EP22020485.3, this invention adds a width-adjusting mechanism to the secure fitting described in the cited material.

This invention provides a device made from a rigid material, with an **Alignment Chamber,** a **Width-Adjusting Mechanism** and a **Clamping-Force-Adjusting Mechanism.**

The **Alignment Chamber** encloses a light/beam source that could utilize lens/lenses to refine the light source.

The Width-Adjusting Mechanism enables the device to be attached to the handlebar firmly on either side of the stem with a firm hold/grip, thereby ensuring the device is centralized when attached.

The Width-Adjusting Mechanism can be implemented in various formats.

The Clamping-Force-Adjusting Mechanism can also be implemented in a number of ways.

For the purpose of clarity and brevity, this application describes an implementation using springs for the Width-Adjusting Mechanism.

The Clamping-Force-Adjusting Mechanism uses nuts and bolts to adjust the clamping force. The clamping force can be implemented using other methods such as springs, ratchet, straps or adhesion.

The Width-Adjusting Mechanism and the Clamping-Force-Adjusting Mechanism can also be implemented using a method similar to that employed in drills that enables the drill to accommodate drill bits of varying dimensions.

The Alignment Chamber should be an integrated part of the tool, although, it can be made as a removable part.

It is essential that the device is made from a rigid material as this is vital in attaining an accurate alignment.

The actual invention can be varied in dimensions, material or implementation, depending on the required application.

It can also be manufactured as a single integrated unit or employ modular and changeable parts.

Please note that the diagrams are not to scale and are for illustrative purposes only.

There is no circuitry shown for the purpose of clarity of the illustrations.

The following section is a detailed explanation of a preferred embodiment of the invention with reference to the following graphical illustrations.
FIGURE 1 shows a top view of an embodiment of the invention consisting of an Alignment Chamber, a Width-Adjusting Mechanism and a Clamping-Force-Adjusting Mechanism
FIGURE 2 shows a perspective view of an embodiment of the invention with the Width-Adjusting Mechanism at minimum width.

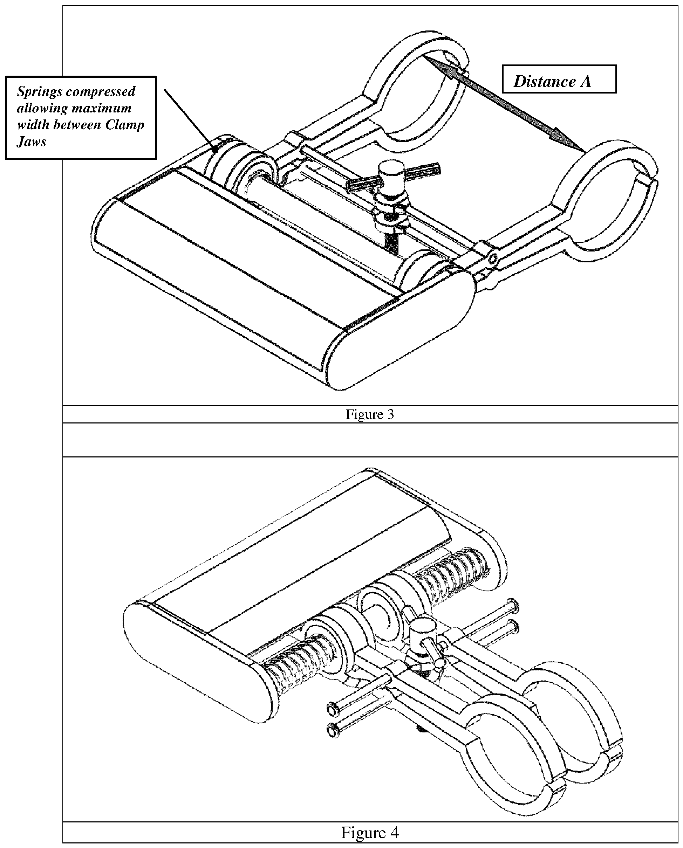

FIGURE 3 shows a perspective view of an embodiment of the invention with the Width-Adjusting Mechanism at maximum width.
FIGURE 4 shows a rear perspective of an embodiment of the invention as per FIGURE 1 and FIGURE 2.
FIGURE 5 shows a rear perspective of an embodiment of the invention as per FIGURE 1 and FIGURE 3.
FIGURE 6 shows a side view of the embodiment of the invention with the Laser/Light beam source in the Alignment Chamber.
FIGURE 7 shows a top perspective of an embodiment of the invention when attached to the cycle handlebar.
FIGURE 8 shows a bottom perspective of an embodiment of the invention when attached to the cycle handlebar.
FIGURE 9 shows a top view of an embodiment of the invention when attached to the cycle handlebar. The light/beam source emitted is illustrated projecting on the central plane of the front wheel.
FIGURE 10 shows a magnification of an embodiment of the invention, illustrating the secure grip on the handlebars and stem.

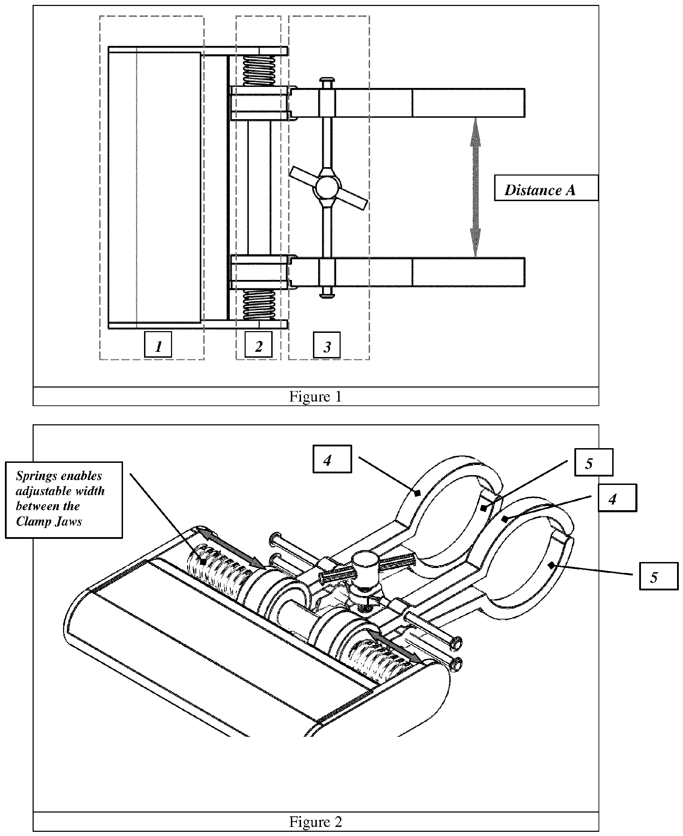

As shown in Figure 1, the Cycle alignment device comprises of at least an **Alignment Chamber 1, Width-Adjusting Mechanism 2** and a **Clamping-Force-Adjusting Mechanism 3.**

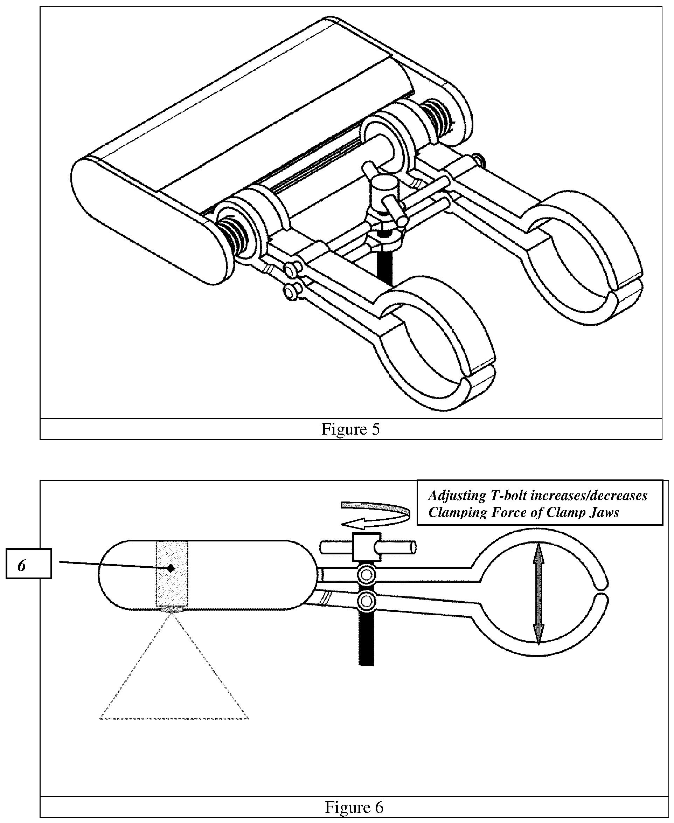

This **Alignment Chamber 1** houses the **Laser/Light Beam Source 6,** as can be seen in Figure 6. A lens may be used to further refine the light beam. In this illustration, the **Laser/Light Beam Source 6** is assumed to laser module that emits a line, although a Laser module that emits any other pattern can be used (for example a dot or a cross. The straight line emitted runs parallel to the spine of the tool.

Although the **Alignment Chamber 1** is illustrated as the full width of the device, it can be a lot smaller in size and proportion.

The device consists of at least one set of **Upper Clamp Jaws 4** and **Upper Clamp Jaws 5.** These may be a permanent part of the device or a removable mechanism. It may also accommodate a set diameter/dimension or varied. Although the **Upper Clamp Jaws 4** and **Lower Clamp Jaws 5** illustrated is in the form of an arc, the shape may be varied to accommodate a non-circular handlebar.

The **Width-Adjusting Mechanism 2** and the **Clamping-Force-Adjusting Mechanism 3** illustrated are two separate mechanism. However, it is possible to combine these two mechanisms into a single mechanism similar to that utilised in drills to accommodate drill bits of different dimensions.

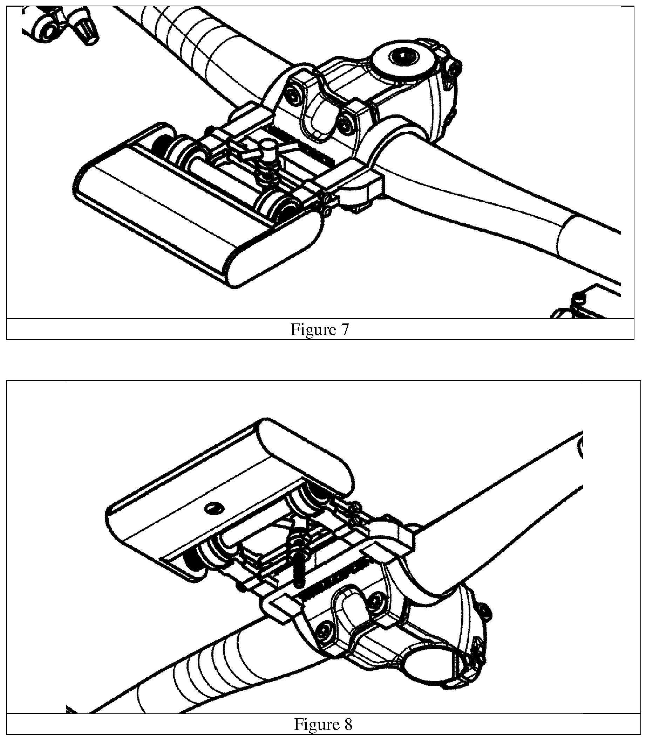

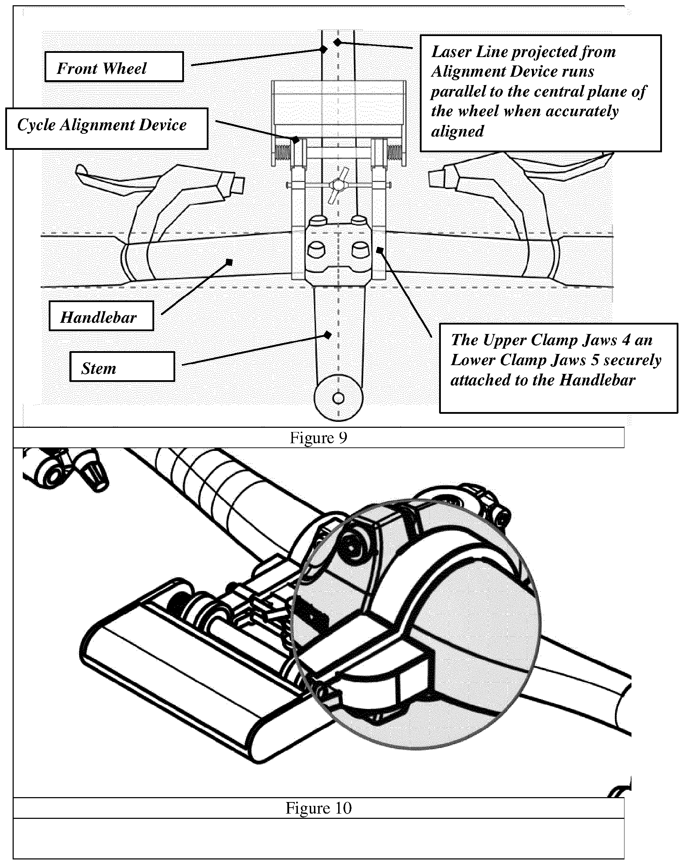

The **Width-Adjusting Mechanism 2** illustrated uses two springs that allows the **Distance A** in Figure 1 to increase or decrease as required. This is to facilitate a flush fit on the either side of the handlebar Stem as shown in Figure 7, Figure 8, Figure 9 and Figure 10.

If the device is implemented with only one set of **Upper Clamp Jaws 4** and **Lower Clamp Jaws 5, then the Width-Adjusting Mechanism 2** will behave more like a centralising mechanism - ensuring the device can be positioned in a way that the emission from the **Laser/Light Beam Source 6** can be as close to the central plane of the wheel as possible.

The **Clamping-Force-Adjusting Mechanism 3** illustrated uses a nut and bolt that can increase or decrease the clamping force as the bolt is tightened or loosened. The **Clamping-Force-Adjusting Mechanism 3** can be implemented in other ways, such as using Springs, Ratchet, Straps or Adhesion (or magnetism).

Although these are not described in this application, the principle of secure connection/attachment and firm grip must hold.

To achieve accurate alignment, the device is attached to the cycle at the stem mount region on the handlebar. The device is firmly fitted to the handlebar. The device should be ideally parallel to the ground when looking from the side.

The **Laser/Light Beam Source 6** is then activated and a line will be projected on the wheel. If the device is accurate, the line projected will run parallel to the spine of the device.

The central seam/plane of the tyre is then aligned parallel to the stem using the projected light (in this case a laser line) as a guide. Once aligned, the projected line will run parallel to the seam/plane of the tyre.

Although the **Alignment Chamber 1** is shown to be centrally aligned along the central plane of the tool, it can be located off-centre, as long as it still projects a laser/light beam that runs parallel to the central plane.

## Claims

1. A cycle alignment device for aligning handlebars with cycle wheels, the device comprising a housing arranged to accommodate a light beam source, and a first and second clamp each releasably attached to the housing, the first and second clamps arranged to be releasably attached to a handlebar of a cycle, in use, the device further comprising a width-adjusting mechanism configured to increase or decrease the relative distance between the first and second clamps, in use.

2. The cycle alignment device of claim 1, wherein the housing comprises a rail.

3. The cycle alignment device of claim 2, wherein the first and second clamps are releasably attached to the housing via the rail, and the first and second clamps are arranged to be slidable along the rail.

4. The cycle alignment device of claim 3, wherein the width-adjusting mechanism comprises a first biasing means configured to bias the first clamp along the rail towards the second clamp.

5. The cycle alignment device of any preceding claim, wherein the width-adjusting mechanism comprises a second biasing means configured to bias the second clamp along the rail towards the first clamp.

6. The cycle alignment device of either one claim 2 and claim 3, wherein the biasing means is a spring.

7. The cycle alignment device of any preceding claim, wherein the device is formed of a rigid material.

8. The cycle alignment device of any preceding claim, wherein the first and second clamps each comprise an upper clamp jaw and a lower clamp jaw.

9. The cycle alignment device of any preceding claim, comprising a clamping-force-adjusting mechanism configured to increase or decrease the clamping force applied by the first and second clamps.

10. The cycle alignment tool of claim 9 when dependent on claim 8, wherein the upper clamp jaw of the first clamp moves simultaneously with the upper clamp jaw of the second clamp.

11. The cycle alignment device of claim 10, wherein the clamping-force-adjusting mechanism comprises a nut and a bolt to adjust the clamping force.

12. The cycle alignment device of any of claims 9 to 10, wherein the clamping-force-adjusting mechanism and the width-adjusting mechanism are a single mechanism.
**Key to Drawings**
1 = Alignment Chamber
2 = Width-Adjusting Mechanism
3 = Clamping-Force-Adjusting Mechanism
4 = Upper Clamp Jaw
5 = Lower Clamp Jaw
6 = Laser/Light Beam Source
